# EUROPÄISCHE PATENTANMELDUNG

(11) **EP 1 881 316 A2**
(43) Veröffentlichungstag der Anmeldung: **23.01.2008**
(21) Anmeldenummer: 07008114.6
(22) Anmeldetag: 20.04.2007
(51) Int. Cl.: G01N 9/18, G01F 23/296

(54) **Vorrichtung und Verfahren zum Bestimmen der Dichte einer Flüssigkeit**

(30) Priorität: 18.07.2006 DE 102006033237
(71) Anmelder: FAFNIR GmbH, D-22765 Hamburg (DE)
(72) Erfinder: Schrittenlacher, Wolfgang, 21075 Hamburg (DE); Maurer, Christian, 22547 Hamburg (DE); Kunter, Stefan, 22337 Hamburg (DE)
(74) Vertreter: UEXKÜLL & STOLBERG

(57) **Zusammenfassung**

Eine Vorrichtung (10) zum Bestimmen der Dichte einer Flüssigkeit enthält einen Auftriebskörper (12), eine an dem Auftriebskörper (12) angreifende Feder (26), deren elastische Deformation ein Maß für die Auftriebskraft des Auftriebskörpers (12) ist, und einen Magneten (18), der für die Erfassung der elastischen Deformation der Feder (26) mittels eines magnetostriktiven Positionsmesssystems eingerichtet ist. Die Feder (26) wird auf Druck beansprucht und greift, falls die Auftriebskraft des Auftriebskörpers (12) größer ist als dessen Gewicht, an dem Auftriebskörper (12) unterhalb von dessen Auftriebsmittelpunkt (A) an. Die Vorrichtung (10) wird vorzugsweise zum Bestimmen der Dichte von Kraftstoff verwendet, wobei ein in einem Lagertank für Kraftstoff vorhandenes magnetostriktives Füllstandmesssystem genutzt wird.

## Beschreibung

Die Erfindung betrifft eine Vorrichtung und ein Verfahren zum Bestimmen der Dichte einer Flüssigkeit, insbesondere zum Bestimmen der Dichte von Kraftstoff in einem Lagertank, z.B. auf einer Tankstelle, in einem Tanklager oder bei einem Tankkraftfahrzeug. Die derart gemessene bzw. bestimmte Dichte kann bei der Datenverwaltung auf Tankstellen und für die Qualitätssicherung benutzt werden. Denn für die Bestimmung der Qualität von Flüssigkeiten ist ihre Dichte ein wichtiger Indikator.

Bei einer herkömmlichen Methode zum Bestimmen der Dichte einer Flüssigkeit wird ein im Bereich der Flüssigkeit angeordneter Differenzdrucksensor benutzt, bei dem aus der gemessenen Druckdifferenz und der bekannten Höhe der Flüssigkeit direkt die Dichte bestimmt werden kann. Differenzdrucksensoren mit den erforderlichen Genauigkeiten im Promillebereich sind jedoch sehr aufwendig und teuer, insbesondere, wenn sie in einem explosionsgeschützten Bereich eingesetzt werden sollen, wie es z.B. für eine Tankstelle erforderlich ist.

Eine andere Möglichkeit sind indirekte Verfahren, wie die Bestimmung der Dichte aus der optischen Dichte n oder der Dielektrizitätszahl ε. Dies ist jedoch ungenau und unzuverlässig.

Ein weiteres, ebenfalls aufwendiges Verfahren ist die Bestimmung der Masse eines bekannten Flüssigkeitsvolumens aus der Schwingung eines Resonators, wie es z.B. bei der Dichtebestimmung von Coriolis-Durchflusssensoren ausgenutzt wird.

Schon lange bekannt ist es, die Dichte einer Flüssigkeit mit Hilfe von Schwimmeraräometern zu messen. Da ein Aräometer nicht vollständig in die Flüssigkeit eintaucht, wandert es mit der Füllhöhe der Flüssigkeit in einem Vorratsbehälter mit, was für eine kontinuierliche Messung bei wechselnden Pegeln oder Füllständen nicht geeignet ist.

In der US 5 942 684 ist ein Verfahren offenbart, bei dem die Dichte über die Wegverschiebung eines Auftriebskörpers bestimmt werden kann, der gegen ein elastisches Element arbeitet. Dabei wird die Auftriebskraft über einen Dehnungsmessstreifen gemessen.

Eine ähnliche Möglichkeit ist in der US 6 418 788 beschrieben. Dabei verschiebt sich ein Auftriebskörper in einer Anordnung mit zwei Schraubenfedern, und der Verschiebungsweg wird mit Hilfe eines Halleffektsensors bestimmt.

In der US 5 471 873 und der US 5 253 522 ist offenbart, wie eine Dichtemessung in ein bereits vorhandenes Füllstandmesssystem integriert werden kann. Hierbei ist oberhalb und unterhalb eines Auftriebskörpers jeweils eine Schraubenfeder angebracht, so dass sich der Auftriebskörper je nach Höhe der Auftriebskraft, also je nach Größe der Dichte der Flüssigkeit, in der sich der Auftriebskörper befindet, gegen die Federkräfte verschiebt. Diese Wegverschiebung wird über eine magnetostriktive Positionsmessung mit hoher Genauigkeit bestimmt. Die magnetostriktive Positionsmessung ist eine bekannte Technik (siehe z.B. US 3 189 849 und US 3 225 312) und wird wegen ihrer Vorteile für Positionsmessaufgaben im Maschinenbau und in der Füllstandmesstechnik eingesetzt.

In vielen Lagertanks werden Flüssigkeiten aufbewahrt, wobei je nach Anwendung, z.B. für den Abrechnungsmodus, das Volumen oder die Masse der gelagerten Flüssigkeit bekannt sein muss. Während das Volumen über den Füllstand mit Hilfe einer sogenannten Peiltabelle bestimmt werden kann, lässt sich die Masse aus dem Volumen und der Dichte ermitteln.

Bei Lagertanks, in denen der Füllstand mittels eines magnetostriktiven Positionsmesssystems bestimmt wird, stehen in der Regel nur kleine Durchführungen für den Einbau einer Messsonde zur Verfügung, z.B. Durchführungen mit 1½ Zoll Durchmesser. Diese Einschränkung gilt auch für ein Dichtemesssystem mit einem Auftriebskörper, wie in der US 5 471 873 und der US 5 253 522 beschrieben. Um die Dichte genau messen zu können, ist jedoch ein möglichst großer Auftriebskörper und/oder eine weiche Feder erforderlich, so dass ein vorgegebener Unterschied in der Auftriebskraft in einer möglichst großen Änderung der Federlänge resultiert. Bei den oben erwähnten vorbekannten Systemen gemäß US 5 471 873, US 5 253 522 und US 6 418 788 sind aber jeweils zwei Federn zur Führung eines Auftriebskörpers vorgesehen: Dadurch halbiert sich bei vorgegebener Federkonstante der nutzbare Messweg. Da ferner bei einer Dichtemessung über einen Auftriebskörper, der gegen ein elastisches Element arbeitet, ein Gleichgewichtszustand zwischen Auftriebskraft, Gewichtskraft und Federkraft erreicht wird, führen schon kleine Reibungseffekte zu einer Hysterese und zur Verfälschung der Messwerte. Weiterhin entsteht bei den vorbekannten Anordnungen bereits durch kleinste Ungleichgewichte ein Kippmoment im Auftriebskörper, was eine erhöhte Reibung zur Folge hat.

Es ist daher Aufgabe der Erfindung, die insbesondere aus der US 5 471 873 und der US 5 253 522 vorbekannten Dichtemessvorrichtungen zu verbessern und eine Möglichkeit zu schaffen, um in Verbindung mit einem magnetostriktiven Positionsmesssystem die Dichte einer Flüssigkeit mit relativ wenig Aufwand und mit hoher Präzision zu bestimmen.

Diese Aufgabe wird gelöst durch eine Vorrichtung zum Bestimmen der Dichte einer Flüssigkeit mit den Merkmalen des Anspruchs 1 und ein Verfahren zum Bestimmen der Dichte einer Flüssigkeit mit den Merkmalen des Anspruchs 10. Vorteilhafte Ausgestaltungen der Erfindung ergeben sich aus den Unteransprüchen.

Die erfindungsgemäße Vorrichtung zum Bestimmen der Dichte einer Flüssigkeit hat einen Auftriebskörper, eine an dem Auftriebskörper angreifende Feder, deren elastische Deformation ein Maß für die Auftriebskraft des Auftriebskörpers ist, und einen Magneten, der für die Erfassung der elastischen Deformation der Feder mittels eines magnetostriktiven Positionsmesssystems eingerichtet ist. Das magnetostriktive Positionsmesssystem kann Bestandteil der Vorrichtung, kann aber auch eine externe Komponente sein, die z.B. in einem Lagertank für Kraftstoff bei einem Füllstandmesssystem ohnehin vorgesehen ist.

Erfindungsgemäß ist die Feder auf Druck beansprucht. Sie greift unterhalb vom Auftriebsmittelpunkt des Auftriebskörpers an dem Auftriebskörper an, falls die Auftriebskraft des Auftriebskörpers größer ist als dessen Gewicht. Falls dagegen die Auftriebskraft des Auftriebskörpers kleiner ist als dessen Gewicht, greift die Feder oberhalb vom Auftriebsmittelpunkt des Auftriebskörpers an dem Auftriebskörper an. Der Auftriebsmittelpunkt ist hier als der Massenschwerpunkt des Auftriebskörpers definiert, der bei homogener Dichteverteilung des Auftriebskörpers vorliegen würde. Oder in anderen Worten, der Auftriebsmittelpunkt ist der Massenschwerpunkt der verdrängten Flüssigkeit, wenn sie die Form des Auftriebskörpers einnimmt.

Die Auftriebskraft des Auftriebskörpers ist gleich dem Gewicht der von dem Auftriebskörper verdrängten Flüssigkeit, also gleich dem Produkt aus dem Volumen des Auftriebskörpers und der Dichte (bzw. des spezifischen Gewichts) der Flüssigkeit. Je nach Größe der Auftriebskraft wird die Feder mehr oder weniger stark deformiert. Wenn sich der Magnet bei einer Deformation der Feder mitbewegt, ändert sich seine Position, was von den magnetostriktiven Positionsmesssystem erfasst werden kann. Die Feder wird auf Druck beansprucht, so dass z.B. eine als Schraubenfeder gestaltete Feder direkt an dem Auftriebskörper oder einem Gegenlager angreifen kann. Bei einer Zugfeder wären dagegen aufwendige und platzraubende Verbindungen erforderlich, die zum Aufnehmen von Zugkräften in der Lage sind. Je nach Gestaltung des Auftriebskörpers ist die bei einer gegebenen Flüssigkeit zu erwartende Auftriebskraft des Auftriebskörpers größer oder kleiner als das Gewicht des Auftriebskörpers. Die Feder greift in diesen beiden Fällen, bezogen auf den Auftriebsmittelpunkt, an unterschiedlichen Stellen des Auftriebskörpers an. Dadurch wird eine stabile Lage des Auftriebskörpers in der Flüssigkeit erreicht. Ferner kann dadurch die Reibung, z.B. in Bezug auf ein Führungsrohr, sehr gering gehalten werden, so dass der Auftriebskörper Dichteänderungen in der Flüssigkeit nahezu hysteresefrei folgen kann. Diese vorteilhafte Wirkung wird noch verstärkt, wenn der Massenschwerpunkt des Auftriebskörpers unterhalb des Auftriebsmittelpunkt des Auftriebskörpers liegt.

Vorzugsweise ist als Feder genau eine Feder vorgesehen, die als Schraubenfeder gestaltet ist. Mehrere Federn sind ebenfalls denkbar, z.B. eine Federeinrichtung mit einer Anzahl von Blattfedern, die auf einen Zylindermantel angeordnet und parallel zur Längsachse dieses Zylinders ausgerichtet sind. In ihrer Wirkungsweise ist die letztgenannte Einrichtung mit einer Schraubenfeder vergleichbar.

Der Auftriebskörper weist vorzugsweise entlang seiner Längsachse eine Aussparung auf, in der die Feder (zumindest teilweise) angeordnet ist. Auf diese Weise kann die Feder problemlos und platzsparend so positioniert werden, dass sie in der oben erläuterten Weise an dem Auftriebskörper angreift.

Bei einer bevorzugten Ausführungsform der Erfindung ist außer dem bereits erwähnten Magneten ein fixierter Referenzmagnet vorgesehen, wobei die Differenz der Positionen des Magneten und des Referenzmagneten entlang eines Messdrahts des magnetostriktiven Positionsmesssystems ein Maß für die zu bestimmende elastische Deformation der Feder ist. Dies ermöglicht es, die erfindungsgemäße Vorrichtung als Einheit zu konstruieren und z.B. in Verbindung mit einem Füllstandmesssystem zu benutzen, das bereits in einem Lagertank vorhanden ist. Wenn sich der Magnet z.B. in dem Auftriebskörper befindet, so dass er die Bewegung des Auftriebskörpers mitmacht, der Referenzmagnet dagegen an einem stationären Gegenlager der Feder, ergibt sich aus der Differenz der Positionen des Magneten und des Referenzmagneten die Deformation der Feder, unabhängig davon, in welcher Höhe die Vorrichtung an dem magnetostriktiven Füllstandmesssystem montiert ist. Wenn dagegen nur ein Magnet vorhanden ist, der die Bewegung bzw. Deformation der Feder mitmacht, hängt die Einstellung der Vorrichtung von der absoluten Höhe an dem magnetostriktiven Positionsmesssystem ab und kann sich z.B. bei Wartungsarbeiten verschieben.

Vorzugsweise weist der Auftriebskörper eine Aussparung zur Aufnahme eines Führungsrohrs auf. Diese Aussparung kann mit der oben erwähnten Aussparung für die Feder identisch sein. Das Führungsrohr lässt sich vorzugsweise über ein Schutzrohr für den Messdraht eines magnetostriktiven Positionsmesssystems schieben.

Grundsätzlich können die erfindungsgemäße Vorrichtung und das damit ausgeübte Verfahren zum Bestimmen der Dichte einer Flüssigkeit mit praktisch beliebigen Flüssigkeiten verwendet werden. Besonders vorteilhaft ist die Erfindung jedoch, wenn sie zum Bestimmen der Dichte von Kraftstoff benutzt wird. In diesem Fall ist vorzugsweise als magnetostriktives Positionsmesssystem ein in einem Lagertank für Kraftstoff ohnehin vorhandenes magnetostriktives Positionsmesssystem vorgesehen, das als Füllstandmesssystem eingesetzt wird.

Derartige Füllstandmesssysteme sind weit verbreitet. Sie enthalten einen vorzugsweise vertikal ausgerichteten Messdraht in einem Schutzrohr, der mit einer Messelektronik verbunden ist. Das Schutzrohr dient gleichzeitig zum Führen eines Schwimmers, in dem ein Magnet montiert ist und der an der Oberfläche des Kraftstoffs schwimmt. Die Position dieses Magneten, also der Füllstand, kann mit Hilfe des magnetostriktiven Effekts ermittelt werden. Da die Messelektronik in der Lage ist, die Messsignale in Bezug auf mehrere Magneten, die in verschiedenen Höhen positioniert sind, zu verarbeiten, sind magnetostriktive Positionsmesssysteme in einem Lagertank für Kraftstoff häufig mit einem zweiten Schwimmer versehen, der im unteren Bereich des Lagertanks an einer Grenzfläche zwischen Wasser und dem spezifisch leichteren Kraftstoff schwimmt. Auf diese Weise ist es möglich, den Wassergehalt in dem Lagertank zu erfassen. Ein häufig in einem Lagertank bereits vorhandenes magnetostriktives Positionsmesssystem mit zugehöriger Messelektronik ist also in der Lage, die Positionen mehrerer Magneten zu bestimmen, und kann daher mit verhältnismäßig geringem Aufwand (im Wesentlichen Programmieraufwand) so umgerüstet werden, dass zusätzlich die Positionen des Magneten und gegebenenfalls des Referenzmagneten der erfindungsgemäßen Vorrichtung zum Bestimmen der Dichte gemessen werden können.

Als Lagertank für Kraftstoff kommen insbesondere Lagertanks auf einer Tankstelle oder in einem Tanklager in Betracht. Die Dichte des Kraftstoffs kann aber auch in einem Nutzlasttank eines Tankkraftfahrzeugs in der erläuterten Weise bestimmt werden.

Bei einer vorteilhaften Ausgestaltung der Erfindung werden mehrere Auftriebskörper mit zugeordneten Federn und Magneten in unterschiedlichen Höhen des magnetostriktiven Positionsmesssystems eines Lagertanks angeordnet. Dies erlaubt es, die Dichte des Kraftstoffs in unterschiedlichen Höhen zu bestimmen. Wie bereits erläutert, ist ein magnetostriktives Positionsmesssystem grundsätzlich in der Lage, die Positionen oder Höhen mehrerer Magnete zu unterscheiden.

Die für die Bestimmung der Dichte erforderlichen Rechenoperationen können auf einem im Bereich einer Tankstelle vorhandenen Rechner durchgeführt werden. In die Berechnung gehen das bekannte Volumen des vollständig in die Flüssigkeit eintauchenden Auftriebskörpers, das bekannte Gewicht des Auftriebskörpers, die durch vorherige Kalibrierungsmessungen ermittelten Eigenschaften der Feder sowie die gemessene Position des Magneten (bzw. die Differenz der gemessenen Positionen von Magnet und Referenzmagnet) ein, in einer dem Fachmann verständlichen Weise.

In Zusatzschritten zu dem Verfahren zum Bestimmen der Dichte kann die in der beschriebenen Weise ermittelte bzw. bestimmte Dichte für eine Vielzahl von Anwendungen benutzt werden.

Ein großes Anwendungsgebiet hierfür ist die Datenverwaltung und die Qualitätssicherung auf einer Tankstelle. So kann der gemessene bzw. bestimmte Dichtewert für den Kraftstoff in einem Lagertank mit dem über eine Füllstandmessung ermittelten Volumen des Kraftstoffs in dem Lagertank multipliziert werden, um die Masse des Kraftstoffs in dem Lagertank zu berechnen. Dies kann für Abrechnungszwecke sinnvoll sein.

Ferner ist die Dichte des Kraftstoffs (oder allgemeiner einer Flüssigkeit) ein Maß für die Zusammensetzung und/oder Qualität der Flüssigkeit, so dass man von der bestimmten Dichte auf die Kraftstoffzusammensetzung oder -qualität schließen kann.

Zusätzliche Möglichkeiten ergeben sich, wenn ein Alarm und/oder eine Notfallabschaltung ausgelöst werden, falls die mit Hilfe der erfindungsgemäßen Vorrichtung bzw. des erfindungsgemäßen Verfahrens bestimmte Dichte außerhalb eines vorgegebenen Bereichs liegt. Ein Beispiel ist die Unterscheidung von Kraftstoff und Wasser durch eine Dichtemessung, wobei gegebenenfalls ein Alarm ausgelöst wird, wenn die Dichtemessung auf das Vorliegen der falschen Flüssigkeit hinweist.

Ferner können die im Laufe der Zeit gemessenen Werte für die Dichte aufgezeichnet werden, um den Dichteverlauf z.B. in einem Lagertank für Kraftstoff zu protokollieren. Dabei kann es sinnvoll sein, zusätzlich die Temperatur der Flüssigkeit bzw. des Kraftstoffs zu messen und die gemessenen Temperaturwerte zusammen mit den zugeordneten Dichtewerten aufzuzeichnen. So lassen sich z.B. temperaturkompensierte Dichtewerte bestimmen. Durch eine derartige Aufzeichnung und Dokumentation der Dichte können Qualitätstrends nachgewiesen werden.

Es ergeben sich also zahlreiche Anwendungsmöglichkeiten in der Qualitätssicherung und der Datenverwaltung, z.B. im Tankstellenbereich, bei Tankfahrzeugen oder in einem Tanklager, aber auch für anderen Flüssigkeiten, die nicht Kraftstoffe sind.

Im Folgenden wird die Erfindung anhand von Ausführungsbeispielen weiter erläutert. Die Zeichnungen zeigen in
- Figur: 1 eine Seitenansicht eines magnetostriktiven Füllstand- und Trennschichtmesssystems, das mit einer Ausführungsform der erfindungsgemäßen Vorrichtung zum Bestimmen der Dichte einer Flüssigkeit ausgerüstet ist, und

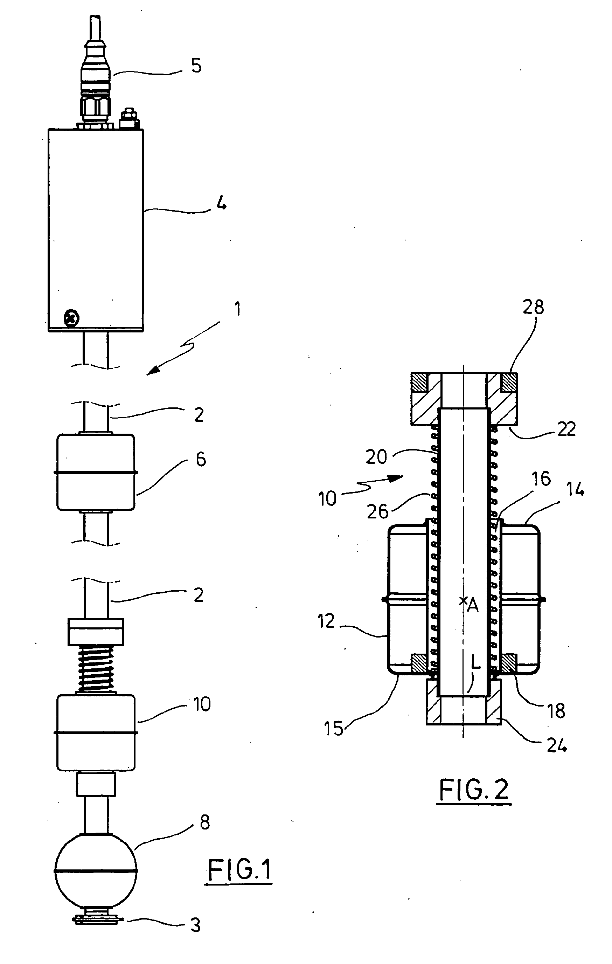

- Figur 2: einen Längsschnitt durch die Vorrichtung zum Bestimmen der Dichte einer Flüssigkeit gemäß Figur 1.

In Figur 1 ist zunächst ein herkömmliches Füllstand- und Trennschichtmesssystem 1 dargestellt, das mit einem magnetostriktiven Positionsmesssystem versehen ist und z.B. in einem Lagertank für Kraftstoff eingebaut sein kann.

Das Füllstand- und Trennschichtmesssystem 1 weist ein Schutzrohr 2 auf, das bis zu einer Endverbreiterung 3 an seinem unteren Ende reicht. Im eingebauten Zustand befindet sich die Endverbreiterung 3 kurz vor der tiefsten Stelle eines Lagertanks.

Im Inneren des Schutzrohrs 2 verläuft auf dessen Längsachse ein Messdraht eines magnetostriktiven Positionsmesssystems, der zu einer Elektronikeinheit 4 geführt ist. Die Elektronikeinheit 4 enthält an ihrer Oberseite einen Anschluss 5, um ein Signalkabel anzuschließen, das mit einer externen Auswerte- und Steuereinrichtung verbunden werden kann.

Magnetostriktive Messsystems sind bekannt, wie eingangs erläutert. Dabei wird ein Permanentmagnet als Positionsgeber genutzt. Durch den Magnetostriktionseffekt werden in einem magnetostriktiven Wellenleiter, hier dem in dem Schutzrohr 2 enthaltenen Messdraht, Ultraschallwellen erzeugt. Die Laufzeit dieser Ultraschallwellen kann mit hoher Präzision gemessen werden, wozu hier die Elektronikeinheit 4 genutzt wird, so dass sich die Position des Permanentmagneten z.B. bis auf 10 µm genau reproduzierbar bestimmen lässt. Es ist auch möglich, eine größere Anzahl von solchen magnetischen Positionsgebern auf einem magnetostriktiven Wellenleiter gleichzeitig oder praktisch gleichzeitig zu messen, was bereits bei dem Füllstand- und Trennschichtmesssystem in seiner herkömmlichen Ausgestaltung ausgenutzt wird.

Dazu ist ein Füllstandschwimmer 6 auf dem Schutzrohr 2 geführt, der an der Oberfläche der in dem Lagertank befindlichen Flüssigkeit schwimmt. Im Inneren des Füllstandschwimmers 6 befindet sich ein Permanentmagnet, mit dessen Hilfe über den Magnetostriktionseffekt die Position des Füllstandschwimmers 6, also der Füllstand in dem Lagertank, bestimmt werden kann.

Im unteren Bereich des Füllstand- und Trennschichtmesssystems 1 ist ein Trennschichtschwimmer 8 angeordnet, der ebenso wie der Füllstandschwimmer 6 längs des zur Führung dienenden Schutzrohrs 2 bewegbar ist und ebenfalls einen Permanentmagneten enthält. Der Trennschichtschwimmer 8 ist auf einen anderen Dichtebereich abgestimmt und schwimmt im Ausführungsbeispiel an einer Grenzfläche zwischen Wasser und spezifisch leichterem Kraftstoff. Daher ermöglicht es der Trennschichtschwimmer, den Pegel von Wasser zu bestimmen, das sich im Laufe der Zeit in einem Lagertank für Kraftstoff unterhalb von dem Kraftstoff ansammeln kann.

Um die Dichte des Kraftstoffs in dem Lagertank messen zu können, ist das Füllstand- und Trennschichtmesssystem 1 mit einer zusätzlichen Komponente versehen, nämlich einer Dichtebestimmungsvorrichtung 10.

Die Dichtebestimmungsvorrichtung 10 ist in Figur 2 in einem vergrößerten Längsschnitt dargestellt.

Ein Auftriebskörper 12 mit einem oberen Ende 14 und einem unteren Ende 15, der im Ausführungsbeispiel rotationssymmetrisch um seine Längsachse L gebaut ist, weist entlang der Längsachse L eine zylindrische Aussparung 16 auf. In der Nähe seines unteren Endes 15 enthält der Innenraum des Auftriebskörpers 12 einen Magneten 18, der ein Permanentmagnet ist und als Positionsgeber in dem magnetostriktiven Positionsmesssystem dient.

Der Auftriebskörper 12 ist längsverschiebbar auf einem Führungsrohr 20 gelagert, das sich zwischen einem oberen Anschlag 22 und einem unteren Anschlag 24 erstreckt. Der Innendurchmesser des Führungsrohrs 20 ist geringfügig größer als der Außendurchmesser des Schutzrohrs 2.

Im Bereich seines unteren Endes 15 hat der Auftriebskörper 12 eine Öffnung, deren Durchmesser geringfügig größer ist als der Außendurchmesser des Führungsrohrs 20, aber kleiner als der Innendurchmesser der im Ausführungsbeispiel zylindrischen Aussparung 16. Dadurch ist ein Vorsprung ausgebildet, an dem sich eine Schraubenfeder 26 mit ihrem unteren Ende abstützen kann. Das obere Ende der Schraubenfeder 26 liegt an dem oberen Anschlag 22 an.

Der obere Anschlag 22 enthält einen Referenzmagneten 28.

Da der Auftriebskörper 12 im Ausführungsbeispiel weitgehend symmetrisch aufgebaut ist, liegt sein Auftriebsmittelpunkt A ungefähr in der Mitte. Wie erläutert, greift die Schraubenfeder 26 in der Nähe des unteren Endes 15 an dem Auftriebskörper 12 an, also unterhalb des Auftriebsmittelpunkts A. Da der Magnet 18 im unteren Bereich des Auftriebskörpers 12 eingebaut ist, liegt der Massenschwerpunkt des Auftriebskörpers 12 ebenfalls unterhalb des Auftriebsmittelpunkts A.

Im Ausführungsbeispiel ist die Auftriebskraft des Auftriebskörpers 12, wenn er in den Kraftstoff in dem Lagertank vollständig eingetaucht ist, größer als sein Gewicht. Daher bewegt sich der Auftriebskörper 12 von dem unteren Anschlag 24 weg nach oben, wird aber durch die dabei zusammengedrückte Schraubenfeder 26 an einer weiteren Aufwärtsbewegung gehindert. Es stellt sich also ein Gleichgewichtszustand zwischen der Auftriebskraft einerseits und der Gewichtskraft sowie der Federkraft andererseits ein. Je größer die Dichte des Kraftstoffs (genauer gesagt, je größer sein spezifisches Gewicht), um so größer ist die Auftriebskraft, d.h. um so stärker wird die Schraubenfeder 26 eingedrückt. Die Gleichgewichtsposition des Auftriebskörpers 12 kann mit Hilfe des magnetostriktiven Positionsmesssystems über den als Positionsgeber dienenden Magneten 18 ermittelt werden.

Die Dichtebestimmungsvorrichtung 10 lässt sich über das Schutzrohr 2 schieben und daran mit Hilfe einer Stellschraube feststellen. Die Stellschraube befindet sich in dem oberen Anschlag 22, ist aber in Figur 2 nicht dargestellt.

Der Referenzmagnet 28 kann ebenfalls als Positionsgeber in dem magnetostriktiven Positionsmesssystem benutzt werden. Daher kann die Dichtebestimmungsvorrichtung 10 verwendet werden, ohne dass Kalibrationsmessungen für die absolute Höhe des Magneten 18 durchgeführt werden müssen. Die elastische Deformation der Feder 26, die aufgrund des erläuterten Gleichgewichts ein Maß für die Dichte des Kraftstoffs ist, ergibt sich aus der Differenz der Positionen des Magneten 18 und des Referenzmagneten 28.

Dadurch, dass die Schraubenfeder 26 unterhalb des Auftriebsmittelpunkts A an dem Auftriebskörper 12 angreift und weil der Massenschwerpunkt des Auftriebskörpers 12 unterhalb des Auftriebsmittelpunkts A liegt, richtet sich der Auftriebskörper 12 automatisch praktisch lotrecht aus. Wenn das Schutzrohr 2 lotgerecht justiert ist, treten daher praktisch keine störenden Reibungskräfte bei der Bewegung des Auftriebskörpers 12 auf. Das erläuterte Gleichgewicht wird also nicht durch unbekannte Kräfte beeinflusst.

Wenn die Schraubenfeder 26 eine weiche Feder ist, ändert sich ihre elastische Deformation bereits bei Ausübung kleiner Kräfte, d.h. die Dichtebestimmungsvorrichtung 10 wird empfindlich. Ferner führt eine große Baulänge der Schraubenfeder 26 zu einer hohen Empfindlichkeit. Wegen der Anordnung der Schraubenfeder 26 in der Aussparung 16 kann trotz einer relativ großen Federlänge eine kompakte Ausführung der Dichtebestimmungsvorrichtung 10 erreicht werden. Dies ist von Vorteil, da durch die Anordnung der Dichtebestimmungsvorrichtung 10 an dem Füllstand- und Trennschichtmesssystem 1 der nutzbare Verschiebungsweg für den Füllstandschwimmer 6 nicht zu sehr eingeschränkt werden sollte.

Bei einer alternativen Ausgestaltung der Dichtebestimmungsvorrichtung sind im Vergleich zu dem Ausführungsbeispiel gemäß Figur 2 im Wesentlichen oben und unten vertauscht. Außerdem ist in diesem Fall der Auftriebskörper 12 schwerer, so dass er ohne Unterstützung nicht nach oben steigen würde. Von unten drückt jedoch die Schraubenfeder, so dass sich wieder ein Gleichgewicht der erläuterten Art einstellt, wobei die Position des Magneten (oder die Differenz der Positionen von Magnet und Referenzmagnet) ein Maß für die zu bestimmende Dichte ist.

Bei der zweiten Ausführungsform muss sich also der Auftriebskörper 12 ebenfalls bewegen können, und die Feder greift oberhalb des Auftriebsmittelpunkts an dem Auftriebskörper an. Ferner sollte der Magnet so angeordnet sein, dass der Massenschwerpunkt des Auftriebskörpers wie im ersten Ausführungsbeispiel unterhalb des Auftriebsmittelpunkts des Auftriebskörpers liegt.

Die Möglichkeit, entlang eines magnetostriktiven Positionsmesssystems mehrere Dichtebestimmungsvorrichtungen anzuordnen, wurde bereits eingangs erläutert. Ferner finden sich dort Ausführungen zu den Anwendungsmöglichkeiten, insbesondere im Bereich einer Tankstelle.

## Patentansprüche

1. Vorrichtung zum Bestimmen der Dichte einer Flüssigkeit, mit einem Auftriebskörper (12), mit einer an dem Auftriebskörper (12) angreifenden Feder (26), deren elastische Deformation ein Maß für die Auftriebskraft des Auftriebskörpers (12) ist, und mit einem Magneten (18), der für die Erfassung der elastischen Deformation der Feder (26) mittels eines magnetostriktiven Positionsmesssystems (1) eingerichtet ist, **dadurch gekennzeichnet, dass** die Feder (26) auf Druck beansprucht ist und, falls die Auftriebskraft des Auftriebskörpers (12) größer ist als dessen Gewicht, an dem Auftriebskörper (12) unterhalb von dessen Auftriebsmittelpunkt (A) angreift, oder, falls die Auftriebskraft des Auftriebskörpers kleiner ist als dessen Gewicht, an dem Auftriebskörper oberhalb von dessen Auftriebsmittelpunkt angreift.

2. Vorrichtung nach Anspruch 1, **dadurch gekennzeichnet, dass** genau eine Feder (26) vorgesehen ist, die als Schraubenfeder (26) gestaltet ist.

3. Vorrichtung nach Anspruch 2, **dadurch gekennzeichnet, dass** der Auftriebskörper (12) eine entlang seiner Längsachse (L) verlaufende Aussparung (16) aufweist, in der die Feder (26) angeordnet ist.

4. Vorrichtung nach einem der Ansprüche 1 bis 3, **dadurch gekennzeichnet, dass** der Massenschwerpunkt des Auftriebskörpers (12) unterhalb des Auftriebsmittelpunkts (A) des Auftriebskörpers (12) liegt.

5. Vorrichtung nach einem der Ansprüche 1 bis 4, **gekennzeichnet durch** einen fixierten Referenzmagneten (28), wobei die Differenz der Positionen des Magneten (18) und des Referenzmagneten (28) entlang eines Messdrahts des magnetostriktiven Positionsmesssystems (1) ein Maß für die zu bestimmende elastische Deformation der Feder (26) ist.

6. Vorrichtung nach einem der Ansprüche 1 bis 5, **dadurch gekennzeichnet, dass** der Auftriebskörper (12) eine Aussparung (16) zur Aufnahme eines Führungsrohrs (20) aufweist.

7. Vorrichtung nach einem der Ansprüche 1 bis 6, **dadurch gekennzeichnet, dass** die Vorrichtung zum Bestimmen der Dichte von Kraftstoff eingerichtet ist.

8. Vorrichtung nach Anspruch 7, **dadurch gekennzeichnet, dass** das magnetostriktive Positionsmesssystem bei einem in einem Lagertank für Kraftstoff vorhandenen Füllstandmesssystem (1) und/oder Trennschichtmesssystem (1) vorgesehen ist, wobei der Lagertank vorzugsweise ein Lagertank auf einer Tankstelle oder in einem Tanklager oder ein Nutzlasttank eines Tankkraftfahrzeugs ist.

9. Vorrichtung nach Anspruch 8, **gekennzeichnet durch** mehrere Auftriebskörper mit zugeordneten Federn und Magneten, die in unterschiedlichen Höhen des magnetostriktiven Positionsmesssystems angeordnet sind.

10. Verfahren zum Bestimmen der Dichte einer Flüssigkeit, wobei der Auftriebskörper (12) einer Vorrichtung (10) nach einem der Ansprüche 1 bis 6 vollständig in die Flüssigkeit eingetaucht wird und die Auftriebskraft des Auftriebskörpers (12) über die elastische Deformation der Feder (26) mittels eines magnetostriktiven Positionsmesssystems (1) bestimmt wird.

11. Verfahren nach Anspruch 10, **dadurch gekennzeichnet, dass** die Dichte von Kraftstoff bestimmt wird, wobei ein magnetostriktives Positionsmesssystem verwendet wird, das bei einem in einem Lagertank für Kraftstoff vorhandenen Füllstandmesssystem (1) und/oder Trennschichtmesssystem (1) vorgesehen ist, wobei der Lagertank vorzugsweise ein Lagertank auf einer Tankstelle oder in einem Tanklager oder ein Nutzlasttank eines Tankkraftfahrzeugs ist.

12. Verfahren nach Anspruch 11, **dadurch gekennzeichnet, dass** durch mehrere Auftriebskörper mit zugeordneten Federn und Magneten, die in unterschiedlichen Höhen des magnetostriktiven Positionsmesssystems angeordnet sind, die Dichte in unterschiedlichen Höhen des Lagertanks bestimmt wird.

13. Verfahren nach Anspruch 11 oder 12, **dadurch gekennzeichnet, dass** für die Bestimmung der Dichte erforderliche Rechenoperationen auf einem im Bereich einer Tankstelle vorhandenen Rechner durchgeführt werden.

14. Verfahren nach einem der Ansprüche 11 bis 13, **dadurch gekennzeichnet, dass** aus einem bekannten Volumen des Kraftstoffs und aus der bestimmten Dichte des Kraftstoffs die Masse des Kraftstoffs berechnet wird.

15. Verfahren nach einem der Ansprüche 10 bis 14, **dadurch gekennzeichnet, dass** die bestimmte Dichte der Flüssigkeit einem vorgegebenen Dichtebereich als Maß für die Zusammensetzung und/oder Qualität der Flüssigkeit zugeordnet wird.

16. Verfahren nach einem der Ansprüche 10 bis 15, **dadurch gekennzeichnet, dass** ein Alarm und/oder eine Notfallabschaltung ausgelöst wird, wenn die bestimmte Dichte außerhalb eines vorgegebenen Bereichs liegt.

17. Verfahren nach einem der Ansprüche 10 bis 16, **dadurch gekennzeichnet, dass** im Laufe der Zeit bestimmte Werte für die Dichte aufgezeichnet werden.

18. Verfahren nach einem der Ansprüche 10 bis 17, **dadurch gekennzeichnet, dass** die Temperatur der Flüssigkeit gemessen wird, wobei vorzugsweise die gemessenen Temperaturwerte zusammen mit den zugeordneten bestimmten Werten für die Dichte aufgezeichnet werden.
